# EUROPÄISCHE PATENTSCHRIFT

(11) **EP 1 700 025 B1**
(45) Veröffentlichungstag und Bekanntmachung des Hinweises auf die Patenterteilung: **11.06.2008**
(21) Anmeldenummer: 04766688.8
(22) Anmeldetag: 02.09.2004
(51) Int. Cl.: F02M 21/02, F02B 27/02, F02D 29/02, F02D 11/08

(54) **VERFAHREN UND VORRICHTUNG ZUM STEUERN EINER BRENNKRAFTMASCHINE**
METHOD AND DEVICE FOR CONTROLLING AN INTERNAL COMBUSTION ENGINE
PROCEDE ET DISPOSITIF POUR PILOTER UN MOTEUR A COMBUSTION INTERNE

(30) Priorität: 26.09.2003 DE 10344759
(43) Veröffentlichungstag der Anmeldung: 13.09.2006
(73) Patentinhaber: Continental Automotive GmbH, 30165 Hannover (DE)
(72) Erfinder: WEISS, Frank, 93080 Pentling/Grasslfing (DE); ZHANG, Hong, 93105 Tegernheim (DE)
(86) Internationale Anmeldenummer: PCT/EP2004/052016
(87) Internationale Veröffentlichungsnummer: WO 2005/031143

(56) Entgegenhaltungen:
- US-A- 5 671 708
- US-A- 5 722 365
- US-A- 5 823 163

## Beschreibung

Die Erfindung betrifft ein Verfahren und eine Vorrichtung zum Steuern einer Brennkraftmaschine mit einem Impulsladeventil, das in einem Saugrohr angeordnet ist.

Aus der DE 102 00 533 A1 ist ein Verfahren und eine Vorrichtung zum Steuern einer Brennkraftmaschine bekannt. Die Brennkraftmaschine hat einen Sammler, von dem ein Saugrohr hin zu einem Einlass eines Zylinders der Brennkraftmaschine geführt ist. Ein Gaseinlassventil ist an dem Einlass des Zylinders angeordnet. Ein Impulsladeventil ist stromaufwärts des Gaseinlassventils in dem Saugrohr angeordnet. Abhängig von der Schaltstellung des Impulsladeventils gibt es das Saugrohr frei oder verschließt es. Ferner ist ein Einspritzventil vorgesehen, welches den Kraftstoff zumisst. Die schnell schaltenden Impulsladeventile, die jedem Zylinder zugeordnet sind, werden während des ersten Abschnitts der Ansaugsequenz geschlossen, so dass sich ein hoher Unterdruck aufbauen kann. Nach zirka der Hälfte der Ansaugsequenz wird das Impulsladeventil - der schnell schaltende Querschnittschalter - schlagartig geöffnet, so dass der während des ersten Abschnitts der Ansaugsequenz erzeugte Unterdruck im Zylinder eine sehr hohe Einströmgeschwindigkeit des angesaugten Luft/Kraftstoff-Gemisches erzeugt. Die sehr schnell in den Brennraum des Zylinders der Brennkraftmaschine einströmende Einlassluftsäule führt in dem Bereich kleinerer und mittlerer Drehzahlen der Brennkraftmaschine zu deutlichen Aufladeeffekten aufgrund der besseren Füllungscharakteristik des jeweiligen Brennraums.

Strengere gesetzliche Vorschriften bezüglich der Emissionen, insbesondere der Abgasemissionen, von Kraftfahrzeugen erfordern, dass diese möglichst in allen Betriebszuständen der Brennkraftmaschine gering gehalten werden. Insbesondere beim Start der Brennkraftmaschine werden grundsätzlich sehr hohe Emissionen erzeugt. Dies ist darauf zurückzuführen, dass die Brennkraftmaschine noch nicht ihre Betriebstemperatur erreicht hat und sich so Kraftstoff an der Wandung des Saugrohrs und/oder den Zylinderinnenwänden ablagert. Dies hat zur Folge, dass ein gewünschtes Luft/Kraftstoff-Verhältnis in den Zylinder gegebenenfalls fehlerhaft eingestellt wird, was zu erhöhten Abgasemissionen führen kann. Darüber hinaus verdunstet der eingespritzte Kraftstoff vor dem Erreichen der Betriebstemperatur schlechter, was ebenfalls zu einem verschlechterten Verbrennungsprozess mit der Folge erhöhter Abgasemissionen, so NOX-, CO- und CH-Emissionen, führen kann. Dies betrifft sowohl Brennkraftmaschinen mit Einspritzventilen, die an den Saugrohren angeordnet sind und den Kraftstoff in die Saugrohre zumessen als auch Brennkraftmaschinen, bei denen die Einspritzventile im Zylinderkopf angeordnet sind und den Kraftstoff direkt in den Brennraum des Zylinders zumessen.

Aus US 5,671,708 und US 5,722,365 sind Verfahren zum Steuern einer Brennkraftmaschine bekannt, mit einem Luftstrom-Steuerventil, das ein Loch in seiner Klappe aufweist und so auch in seiner Schließstellung noch eine Luftströmung durch das Saugrohr ermöglicht. Das Luftstrom-Steuerventil ist während des gesamten Startbetriebs der Brennkraftmaschine geschlossen, mit der Folge, dass Luft in die Zylinder der Brennkraftmaschine lediglich durch das Loch in der Klappe angesaugt wird.

Die Aufgabe der Erfindung ist es, ein Verfahren und eine Vorrichtung zum Steuern einer Brennkraftmaschine zu schaffen, mit dem Schadstoffemissionen verringert werden.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren und eine entsprechende Vorrichtung zum Steuern einer Brennkraftmaschine mit einem Sammler, von dem ein Saugrohr hin zu einem Einlass eines Zylinders der Brennkraftmaschine geführt ist, ein Gaseinlassventil, das an dem Einlass des Zylinders angeordnet ist, ein Impulsladeventil, das stromaufwärts des Gaseinlassventils in dem Saugrohr angeordnet ist und abhängig von seiner Schaltstellung das Saugrohr freigibt oder verschließt, und einem Einspritzventil, mit dem Kraftstoff zugemessen wird. Die zeitliche Lage der Einspritzzeitdauer des Kraftstoffs wird abhängig von einem Zeitpunkt einer Änderung der Schaltstellung des Impulsladeventils eingestellt.

Durch das Koppeln der zeitlichen Lage der Einspritzzeitdauer des Kraftstoffs an den Zeitpunkt der Änderung der Schaltstellung des Impulsladeventils kann sichergestellt werden, dass während des Zumessens des Kraftstoffs eine hohe Strömungsgeschwindigkeit der Luft herrscht und so einfach eine gute Aufbereitung des Luft/Kraftstoff-Gemisches erreichbar ist, wodurch die Emissionen verringert werden.

In einer vorteilhaften Ausgestaltung der Erfindung wird die zeitliche Lage der Einspritzzeitdauer so gewählt, dass während der Einspritzzeitdauer die Strömungsgeschwindigkeit der Luft ihr Maximum erreicht. Dies hat den Vorteil, dass eine besonders gute Gemischaufbereitung erreichbar ist.

In einer weiteren vorteilhaften Ausgestaltung der Erfindung wird der Zeitpunkt des Steuerns des Impulsladeventils in seine Offenstellung während des Ansaugtaktes so gewählt, dass die Strömungsgeschwindigkeit der Luft einen vorgegebenen Wert erreicht. Dies hat den Vorteil, dass die Güte der Gemischaufbereitung einfach einstellbar ist.

In einer weiteren vorteilhaften Ausgestaltung der Erfindung wird der Zeitpunkt des Steuerns des Impulsladeventils in seine Schließstellung von seiner Offenstellung während des Ansaugtaktes so gewählt, dass die Strömungsgeschwindigkeit der Luft im nachfolgenden Ansaugtakt einen vorgegebenen Wert erreicht. Dies hat den Vorteil, dass ebenfalls die Güte der Gemischaufbereitung einfach einstellbar ist und der Beginn der Zumessung des Kraftstoffs sehr bald nach dem Öffnen des Gaseinlassventils erfolgen kann.

In einer weiteren vorteilhaften Ausgestaltung der Erfindung hängt die zeitliche Lage der Einspritzzeitdauer des Kraftstoffs lediglich in einem Betriebszustand des Warmlaufs der Brennkraftmaschine ab von einem Zeitpunkt einer Änderung der Schaltstellung des Impulsladeventils. Dies hat den Vorteil, dass so der Kraftstoffverbrauch der Brennkraftmaschine gering gehalten werden kann, ohne eine wesentliche Zunahme an Emissionen in Kauf nehmen zu müssen, da außerhalb des Betriebszustands des Warmlaufs in der Regel eine ausreichend gute Gemischaufbereitung und Kraftstoffverdampfung gewährleistet ist und dann das Impulsladeventil außerhalb des Warmlaufs so gesteuert werden kann, dass die Brennkraftmaschine einen hohen Wirkungsgrad hat. Der Betriebszustand des Warmlaufs ist vorzugsweise dadurch charakterisiert, dass eine Kühlmitteltemperatur und/oder eine Öltemperatur kleiner sind als vorgegebene Schwellenwerte und/oder die Zeit seit dem Start der Brennkraftmaschine kleiner ist als ein vorgegebener weiterer Schwellenwert.

Ausführungsbeispiele der Erfindung werden im folgenden anhand der schematischen Zeichnungen erläutert. Es zeigen:
- Figur 1: eine Brennkraftmaschine mit einer Steuereinrichtung,
- Figur 2a, 2b: ein Ablaufdiagramm einer ersten Ausführungsform eines Programms zum Steuern der Brennkraftmaschine,
- Figur 3a, 3b: ein weiteres Ablaufdiagramm einer weiteren Ausführungsform eines Programms zum Steuern der Brennkraftmaschine, und
- Figur 4: Verläufe des Ventilhubs der Gaseinlass- und Gasauslassventile, der Schaltstellung eines Impulsladeventils aufgetragen über den Kurbelwellenwinkel und den zeitlichen Verlauf der Zumessung von Kraftstoff.

Elemente gleicher Konstruktion und Funktion sind figurenübergreifend mit den gleichen Bezugszeichen gekennzeichnet.

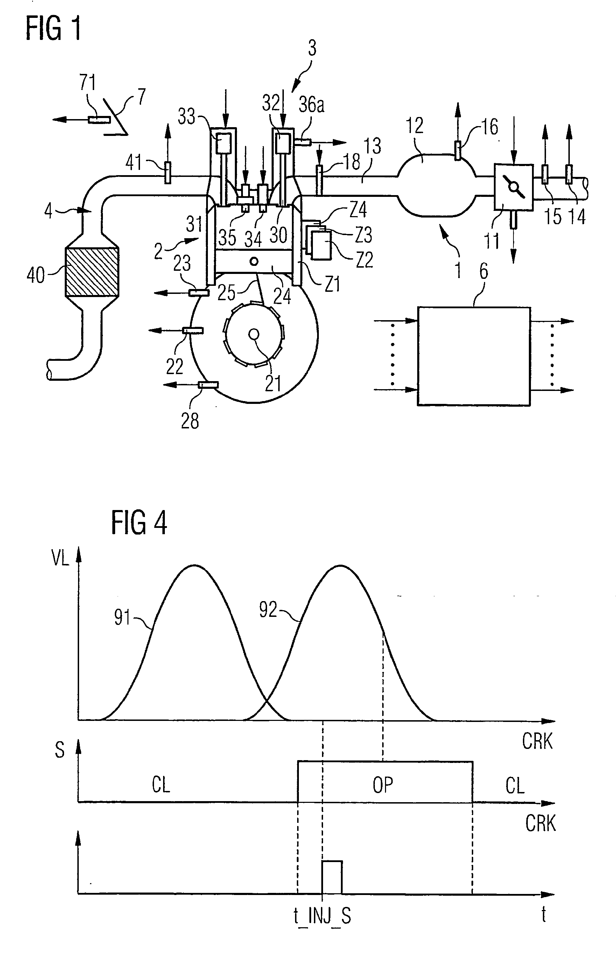

Eine Brennkraftmaschine (Figur 1) umfasst einen Ansaugtrakt 1, einen Motorblock 2, einen Zylinderkopf 3 und einen Abgastrakt 4. Der Ansaugtrakt umfasst vorzugsweise eine Drosselklappe 11, ferner einen Sammler 12 und ein Saugrohr 13, das hin zu einem Zylinder Z1 über einen Einlasskanal in den Motorblock geführt ist. Der Motorblock umfasst ferner eine Kurbelwelle 21, welche über eine Pleuelstange 25 mit dem Kolben 24 des Zylinders Z1 gekoppelt ist.

Der Zylinderkopf 3 umfasst einen Ventiltrieb mit einem Einlassventil 30, einem Auslassventil 31 und Ventilantrieben 32, 33. Der Antrieb des Gaseinlassventils 30 und des Gasauslassventils 31 erfolgt dabei mittels einer Nockenwelle.

Der Zylinderkopf 3 umfasst ferner ein Einspritzventil 34 und eine Zündkerze 35. Alternativ kann das Einspritzventil 34 auch in dem Ansaugkanal angeordnet sein.

Der Abgastrakt 4 umfasst eine Katalysator 40.

In dem Saugrohr 13 ist ferner ein Impulsladeventil 18 angeordnet, das in einer Schaltstellung S, der Offenstellung OP, den Querschnitt des Saugrohrs 13 freigibt und in einer weiteren Schaltstellung S, der Schließstellung CL, den Querschnitt des Saugrohrs 13 verschließt.

Ferner ist eine Steuereinrichtung 6 vorgesehen, der Sensoren zugeordnet sind, die verschiedene Messgrößen erfassen und jeweils den Messwert der Messgröße ermitteln. Die Steuereinrichtung 6 ermittelt abhängig von mindestens einer der Messgrößen Stellgrößen, die dann in ein oder mehrere Stellsignale zum Steuern der Stellglieder mittels entsprechender Stellantriebe umgesetzt werden.

Die Sensoren sind ein Pedalstellungsgeber 71, welcher die Stellung eines Fahrpedals 7 erfasst, ein Luftmassenmesser 14, welcher einen Luftmassenstrom stromaufwärts der Drosselklappe 11 erfasst, ein Temperatursensor 15, welcher die Ansauglufttemperatur erfasst, ein Drucksensor 16, welcher den Saugrohrdruck erfasst, ein Kurbelwellenwinkelsensor 22, welcher einen Kurbelwellenwinkel CRK erfasst, ein weiterer Temperatursensor 23, welcher eine Kühlmitteltemperatur TCO erfasst, noch ein Temperatursensor 28, der eine Öltemperatur TOIL erfasst, ein Nockenwellenwinkelsensor 36, welcher den Nockenwellenwinkel erfasst und eine Sauerstoffsonde 41 welche einen Restsauerstoffgehalt des Abgases erfasst. Je nach Ausführungsform der Erfindung kann eine beliebige Untermenge der genannten Sensoren oder auch zusätzliche Sensoren vorhanden sein.

Die Stellglieder sind beispielsweise die Drosselklappe 11, die Gaseinlass- und Gasauslassventile 30, 31, das Einspritzventil 34, die Zündkerze 35, die Verstelleinrichtung 37 und das Impulsladeventil 18.

Neben dem Zylinder Z1 kann die Brennkraftmaschine auch noch weitere Zylinder Z2-Z4 umfassen, denen dann ebenfalls entsprechende Stellglieder zugeordnet sind.

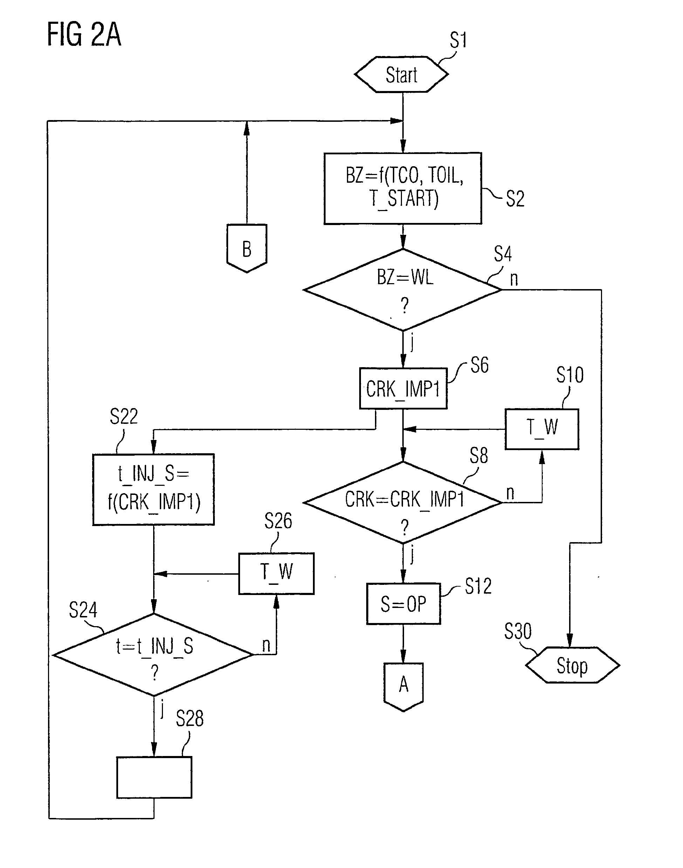

Ein Programm zum Steuern der Brennkraftmaschine, das in der Steuereinrichtung 6 abgespeichert ist, wird beim Betrieb der Brennkraftmaschine abgearbeitet. Das Programm wird in einem Schritt S1 (Figur 2a) gestartet, in dem gegebenenfalls Variablen initialisiert werden. Der Start erfolgt vorzugsweise unmittelbar nach dem Beginn des Motorstarts.

In einem Schritt S2 wird der Betriebszustand BZ der Brennkraftmaschine abhängig von der Kühlmitteltemperatur TCO und/oder der Öltemperatur TOIL und/oder der Zeit seit der Zeitdauer T__START seit dem Start der Brennkraftmaschine ermittelt.

Anschließend wird in einem Schritt S4 geprüft, ob der Betriebszustand BZ der Brennkraftmaschine der Warmlauf WL ist. Ist dies nicht der Fall, so wird das Programm in einem Schritt S30 gestoppt. Ist die Bedingung des Schrittes S4 hingegen erfüllt, so wird in einem Schritt S6 ein erster Kurbelwellenwinkel CRK_IMP1 ermittelt, zu dem das Impulsladeventil 18 von seiner Schließstellung CL in seine Offenstellung OP gesteuert wird, während das Gaseinlassventil 30 den Einlass freigibt.

Der erste Kurbelwellenwinkel CRK_IMP1 ist entweder in einer einfachen Ausführungsform fest vorgegeben oder kann von Betriebsgrößen der Brennkraftmaschine abhängen. Er ist auf jeden Fall so gewählt, dass nach dem Wechsel der Schaltstellung S des Impulsladeventils 18 von seiner Schließstellung CL in die Offenstellung OP die Strömungsgeschwindigkeit der Luft einen vorgegebenen Wert erreicht. Dies ist vorzugsweise durch Versuche mit der Brennkraftmaschine vorab an einem Motorprüfstand ermittelt.

In einem Schritt S8 wird geprüft, ob der aktuelle Kurbelwellenwinkel CRK gleich ist dem ersten Kurbelwellenwinkel CRK_IMPÆ. Ist dies nicht der Fall, so verharrt das Programm für eine vorgegebene Wartezeitdauer T_W in einem Schritt S10, bevor die Bedingung des Schrittes S8 erneut geprüft wird.

Ist die Bedingung des Schrittes S8 hingegen erfüllt, so wird in einem Schritt S12 das Impulsladeventil 18 in seine Offenstellung OP gesteuert. Anschließend wird in einem Schritt S14 ein zweiter Kurbelwellenwinkel CRK_IMP2 ermittelt, zu dem das Impulsladeventil wieder in seine Schließstellung CL gesteuert wird. Der zweite Kurbelwellenwinkel CRK_IMP2 kann fest vorgegeben sein oder auch abhängen von Betriebsgrößen der Brennkraftmaschine.

In einem Schritt S16 wird geprüft, ob der aktuelle Kurbelwellenwinkel CRK gleich ist dem zweiten Kurbelwellenwinkel CRK_IMP2. Ist dies nicht der Fall, so verharrt das Programm für die vorgegebene Wartezeitdauer T_W in einem schritt S20, bevor die Bedingung des Schrittes S16 erneut geprüft wird.

Ist die Bedingung des Schrittes S16 hingegen erfüllt, so wird in einem Schritt S18 das Impulsladeventil 18 in seine Schließstellung CL gesteuert. Anschließend wird die Bearbeitung, gegebenenfalls nach der Wartezeitdauer T_N erneut in dem Schritt S2 fortgesetzt.

Im Anschluss an die Bearbeitung des Schrittes S6 wird parallel zu den Schritten S8 bis S18 die Bearbeitung in einem Schritt S22 fortgesetzt, in dem ein Zeitwert ermittelt wird, der charakteristisch ist für die zeitliche Lage der Einspritzzeitdauer des Kraftstoffs. So wird in dem Schritt S22 beispielsweise der Zeitpunkt t_INJ_S des Beginns der Einspritzung abhängig von dem ersten Kurbelwellenwinkel CRK_IMP1 ermittelt.

Alternativ kann jedoch auch das Ende oder ein beliebiger Zwischenwert der Einspritzung ermittelt werden. Der Zeitpunkt t_INJ_S wird bevorzugt durch Kennlinien oder Kennfeldinterpolation ermittelt. Und zwar so, dass dann während der Einspritzung eine hohe Strömungsgeschwindigkeit der Luft herrscht, wodurch eine gute Gemischaufbereitung erreichbar ist.

Insbesondere bei Brennkraftmaschinen mit Einspritzventilen, die an den Saugrohren 13 angeordnet sind, ist es vorteilhaft, wenn der Zeitpunkt t_INJ_S des Starts der Einspritzung so gewählt ist, dass bis zum Ende der Einspritzung eine ausreichend hohe Strömungsgeschwindigkeit der Luft herrscht und so auch die gesamte zugemessene Kraftstoffmenge in den Zylinder der Brennkraftmaschine gelangen kann.

Darüber hinaus ist es vorteilhaft, wenn der Zeitpunkt t_INJ_S des Starts der Einspritzung so gewählt ist, dass während der Einspritzzeitdauer die Strömungsgeschwindigkeit der Luft ihr Maximum erreicht. So ist eine sehr gute Gemischaufbereitung gewährleistet. Besonders einfach kann dies erreicht werden, wenn die Kennfeldwerte entsprechend gewählt sind, was durch Versuche mit der Brennkraftmaschine an einem Motorprüfstand einfach ermittelt werden kann.

In einem Schritt S24 wird anschließend geprüft, ob die aktuelle Zeit t gleich ist dem Zeitpunkt t_INJ_S des Beginns der Einspritzung. Ist die Bedingung des Schrittes S24 nicht erfüllt, so wird sie erneut nach Ablauf der Wartezeitdauer T_W in dem Schritt S26 erneut geprüft. Ist die Bedingung des Schrittes S24 hingegen erfüllt, so wird in einem Schritt S28 das Einspritzventil 34 zum Zumessen von Kraftstoff angesteuert. Anschließend wird die Bearbeitung gegebenenfalls nach der vorgegebenen Wartezeitdauer T_W erneut in dem Schritt S2 fortgesetzt.

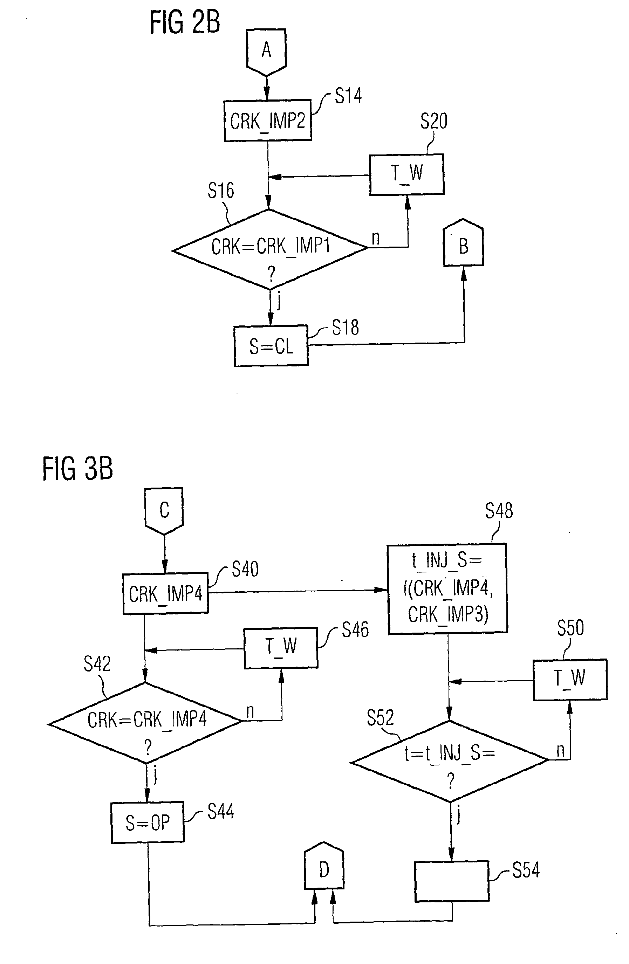

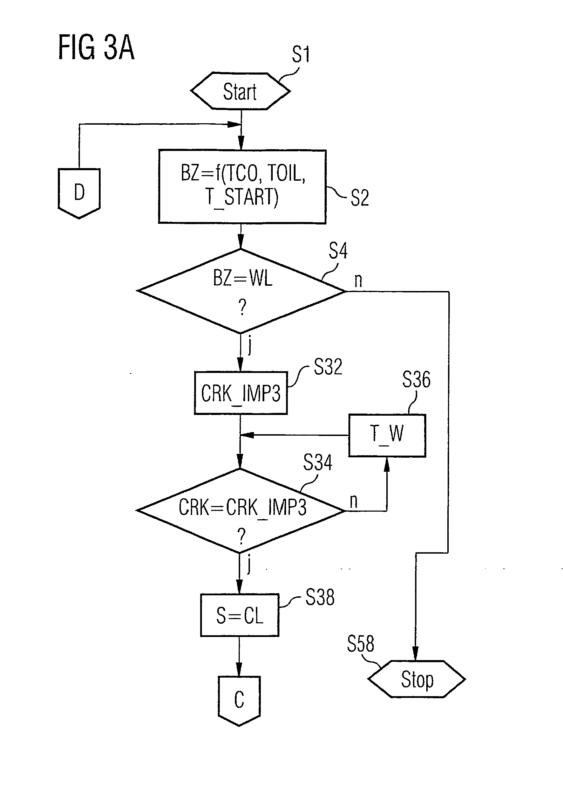

Eine alternative Ausführungsform des Programms zum Steuern der Brennkraftmaschine ist anhand des Ablaufdiagramms der Figuren 3a und 3b dargestellt. Anschließend an den Schritt S4 wird hier in einem Schritt S32 ein dritter Kurbelwellenwinkel CRK_IMP3 ermittelt. Der dritte Kurbelwellenwinkel CRK_IMP3 ist der Kurbelwellenwinkel, bei dem das Impulsladeventil 18 von seiner Offenstellung zu einer Schließsteuerung gesteuert wird und zwar noch während das Gaseinlassventil geöffnet ist. Dadurch wird dann in dem Bereich zwischen dem Impulsladeventil 18 und dem Gaseinlassventil 30 ein Unterdruck erzeugt, der dann bis zum erneuten Wechsel des Impulsladeventils 18 von seiner Schließposition CL in die Offenposition OP gespeichert wird.

Der dritte Kurbelwellenwinkel CRK_IMP3 ist entweder fest vorgegeben oder wird abhängig von Betriebsgröße der Brennkraftmaschine durch Kennfeldinterpolation ermittelt. Er ist dabei so vorgegeben, dass die Strömungsgeschwindigkeit der Luft im nachfolgenden Ansaugtakt einen vorgegebenen Wert erreicht.

In einem Schritt S34 wird geprüft, ob der aktuelle Kurbelwellenwinkel CRK gleich ist dem dritten Kurbelwellenwinkel CRK_IMP3. Ist dies nicht der Fall, so verharrt das Programm für die vorgegebene Wartezeitdauer T_W in dem Schritt S36, bevor die Bedingung des Schrittes S34 erneut geprüft wird. Ist die Bedingung des Schrittes S34 hingegen erfüllt, so wird in einem Schritt S38 das Impulsladeventil 18 in seine Schließstellung CL gesteuert.

In einem Schritt S40 wird ein vierter Kurbelwellenwinkel CRK_IMP4 ermittelt. Der vierte Kurbelwellenwinkel CRK_IMP4 ist entweder fest vorgegeben oder hängt ab von Betriebsgrößen der Brennkraftmaschine. In einem Schritt S42 wird geprüft, ob der aktuelle Kurbelwellenwinkel CRK gleich ist dem vierten Kurbelwellenwinkel CRK_IMP4. Ist dies nicht der Fall, so verharrt das Programm für die vorgegebene Wartezeitdauer T_W in einem Schritt S46, bevor die Bedingung des Schrittes S42 erneut geprüft wird.

Ist die Bedingung des Schrittes S42 hingegen erfüllt, so wird das Impulsladeventil 18 in einem Schritt S44 in seine Offenstellung OP gesteuert. Anschließend wird die Bearbeitung, gegebenenfalls nach der vorgegebenen Wartezeitdauer T_W erneut in dem Schritt S2 fortgesetzt.

Im Anschluss an den Schritt S40 wird entsprechend der Ausführungsform gemäß Figur 2a und b parallel zu den Schritten S42 bis S46 die Bearbeitung in dem Schritt S48 fortgesetzt, in dem der Zeitpunkt t_INJ_S des Beginns der Einspritzung ermittelt wird und zwar abhängig von dem dritten und/oder dem vierten Kurbelwellenwinkel CRK_IMP3, CRK_IMP4. Dies erfolgt so, dass während der Einspritzung eine hohe Einströmungsgeschwindigkeit der Luft herrscht.

Bevorzugt wird der Zeitpunkt t_INJ_S des Beginns der Einspritzung so gewählt, dass während der Einspritzzeitdauer die Strömungsgeschwindigkeit der Luft ihr Maximum erreicht, wodurch eine besonders gute Gemischaufbereitung aufgrund der hohen Dynamik der Strömung erreicht werden kann. Durch eine gute Gemischaufbereitung, d.h. einer feinen Zerstäubung der Kraftstofftropfen und einer somit sehr homogenen LuftKraftstoff-Mischung werden auch während des Warmlaufs Wandablagerungen oder Ablagerungen des Kraftstoffs an den Zylinderinnenwänden des Zylinders Z1 stark verringert, was zu einem kontrollierteren Ablauf des Verbrennungsprozesses führt und damit eine Senkung der Emissionen der Brennkraftmaschine bereits im Warmlauf zur Folge hat.

In einem Schritt S52 wird geprüft, ob die aktuelle Zeit gleich ist dem Zeitpunkt t_INJ_S des Beginns der Einspritzung. Ist dies nicht der Fall, so verharrt das Programm für die vorgegebene Wartezeitdauer T_W in dem Schritt S50. Ist die Bedingung des Schrittes S52 hingegen erfüllt, so wird in einem Schritt S54 das Einspritzventil zur Kraftstoffzumessung angesteuert. Anschließend wird die Bearbeitung, gegebenenfalls nach der vorgegebenen Wartezeitdauer T_W, in dem Schritt S2 fortgesetzt.

Der Kurbelwellenwinkel des Steuerns des Impulsladeventils in seine Offenstellung OP oder in seine Schließstellung CL kann selbstverständlich auch als ein entsprechender Zeitpunkt ausgedrückt werden. Ebenso kann der Zeitpunkt t_INJ_S des Beginns der Einspritzung in einem entsprechenden Kurbelwellenwinkel ausgedrückt werden.

In Figur 4 ist beispielhaft der Verlauf des Ventilhubs VL des Gasauslassventils 31, gekennzeichnet mit dem Bezugszeichen 91, und der Verlauf des Ventilhubs VL des Gaseinlassventils 30, gekennzeichnet mit der 92, aufgetragen über den Kurbelwellenwinkel CRK. Ferner ist die Schaltstellung S des Impulsladeventils 18 aufgetragen über den Kurbelwellenwinkel. Ferner ist die Ansteuerung des Einspritzventils 34 aufgetragen über die dem Kurbelwellenwinkelverlauf CRK entsprechende Zeit t. Der Beginn der Kraftstoffzumessung ist durch den Zeitpunkt t_INJ_S gekennzeichnet.

## Patentansprüche

1. Verfahren zum Steuern einer Brennkraftmaschine mit einem Sammler (12), von dem ein Saugrohr (13) hin zu einem Einlass eines Zylinders (Z1 bis Z4) der Brennkraftmaschine geführt ist, ein Gaseinlassventil (30), das an dem Einlass des Zylinders (Z1 bis Z4) angeordnet ist, einem Impulsladeventil (18), das stromaufwärts des Gaseinlassventils (30) in dem Saugrohr (13) angeordnet ist und abhängig von seiner Schaltstellung (S) das Saugrohr (13) freigibt oder verschließt, und einem Einspritzventil (34), mit dem Kraftstoff zugemessen wird, **dadurch gekennzeichnet, dass** die zeitliche Lage der Einspritzzeitdauer des Kraftstoffs abhängig von einem Zeitpunkt einer Änderung der Schaltstellung (S) des Impulsladeventils (18) eingestellt wird.

2. Verfahren nach Anspruch 1,
**dadurch gekennzeichnet, dass** die zeitliche Lage der Einspritzzeitdauer des Kraftstoffs so gewählt wird, dass während der Einspritzzeitdauer die Strömungsgeschwindigkeit der Luft ihr Maximum erreicht.

3. Verfahren nach einem der vorstehenden Ansprüche, **dadurch gekennzeichnet, dass** der Zeitpunkt des Steuerns des Impulsladeventils (18) in seine Offenstellung (OP) während des Ansaugtakts so gewählt wird, dass die Strömungsgeschwindigkeit der Luft einen vorgegebenen Wert erreicht.

4. Verfahren nach einem der vorstehenden Ansprüche, **dadurch gekennzeichnet, dass** der Zeitpunkt des Steuerns des Impulsladeventils (18) in seine Schließstellung (CL) von seiner Offenstellung (OP) während des Ansaugtakts so gewählt wird, dass die Strömungsgeschwindigkeit der Luft im nachfolgenden Ansaugtakt einen vorgegebenen Wert erreicht.

5. Verfahren nach einem der vorstehenden Ansprüche, **dadurch gekennzeichnet, dass** die zeitliche Lage der Einspritzzeitdauer des Kraftstoffs lediglich in einem Betriebszustand (BZ) des Warmlaufs der Brennkraftmaschine abhängig von einem Zeitpunkt einer Änderung der Schaltstellung (S) des Impulsladeventils (18) eingestellt wird.

6. Verfahren nach Anspruch 5,
**dadurch gekennzeichnet, dass** der Betriebszustand (BZ) des Warmlaufs (WL) eingenommen wird, wenn eine Kühlmitteltemperatur (TCO) und/oder eine Öltemperatur (TOIL) kleiner sind als vorgegebene Schwellenwerte und/oder die Zeit seit dem Start der Brennkraftmaschine kleiner ist als ein vorgegebener weiterer Schwellenwert.

7. Vorrichtung zum Steuern einer Brennkraftmaschine mit einem Sammler (12), von dem ein Saugrohr (13) hin zu einem Einlass eines Zylinders (Z1 - Z4) der Brennkraftmaschine geführt ist, ein Gaseinlassventil (30), das an dem Einlass des Zylinders (Z1 - Z4) angeordnet ist, einem Impulsladeventil (18), das stromaufwärts des Gaseinlassventils (30) in dem Saugrohr (13) angeordnet ist und abhängig von seiner Schaltstellung (S) das Saugrohr (13) freigibt oder verschließt, und einem Einspritzventil (34), mit dem Kraftstoff zugemessen wird,
**dadurch gekennzeichnet, dass** Mittel vorgesehen sind, die die zeitliche Lage der Einspritzzeitdauer des Kraftstoffs abhängig von einem Zeitpunkt einer Änderung der Schaltstellung (S) des Impulsladeventils (18) einstellen.

## Claims

1. Method for controlling an internal combustion engine comprising a manifold (12) from which an intake tube (13) extends to an intake of a cylinder (Z1 to Z4) of the internal combustion engine, a gas inlet valve (30) which is disposed at the intake of the cylinder (Z1 to Z4), an intermittent charge valve (18) which is disposed upstream of the gas inlet valve (30) in the intake tube (13) and which releases or closes the intake tube (13) depending on its switching position (S), and an injection valve (34) for metering fuel,
**characterised in that**
the temporal position of the duration of injection of the fuel is adjusted depending on a point in time at which the switching position (S) of the intermittent charge valve (18) is changed.

2. Method according to claim 1,
**characterised in that**
the temporal position of the duration of injection of the fuel is selected such that the velocity of flow of the air reaches its maximum during the injection period.

3. Method according to any one of the preceding claims,
**characterised in that**
the point of time at which the intermittent charge valve (18) is guided to its open position (OP) during the intake stroke is chosen such that the flow velocity of the air reaches a predetermined value.

4. Method according to any one of the preceding claims,
**characterised in that**
the point of time at which the intermittent charge valve (18) is guided to its closed position (CL) from its open position (OP) during the intake stroke is chosen such that the flow velocity of the air reaches a predetermined value in the subsequent intake stroke.

5. Method according to any one of the preceding claims,
**characterised in that**
the temporal position of the duration of injection of the fuel is adjusted only in a warm-up operating state (BZ) of the internal combustion engine, depending on a point in time at which the switching position (S) of the intermittent charge valve (18) is changed.

6. Method according to claim 5,
**characterised in that**
the warm-up (WL) operating state (BZ) is adopted when a coolant temperature (TCO) and/or an oil temperature (TOIL) are less than predetermined threshold values and/or the time since the start-up of the internal combustion engine is less than a predetermined further threshold value.

7. Device for controlling an internal combustion engine comprising a manifold (12) from which an intake tube (13) extends to an intake of a cylinder (Z1 to Z4) of the internal combustion engine, a gas inlet valve (30) which is disposed at the intake of the cylinder (Z1 to Z4), an intermittent charge valve (18) which is disposed upstream of the gas inlet valve (30) in the intake tube (13) and which releases or closes the intake tube (13) depending on its switching position (S), and an injection valve (34) for metering fuel,
**characterised in that** means are provided which adjust the temporal position of the duration of injection of the fuel depending on a point in time at which the switching position (S) of the intermittent charge valve (18) is changed.

## Revendications

1. Procédé de commande d'un moteur à combustion interne comprenant un collecteur (12) dont part un tube d'aspiration (13) qui va vers une entrée d'un cylindre (Z1 à Z4) du moteur à combustion interne, une soupape d'admission de gaz (30) qui est située à l'entrée du cylindre (Z1 à Z4), une soupape de charge à impulsions (18) qui est située dans le tube d'aspiration (13) en amont de la soupape d'admission de gaz (30) et libère ou obture le tube d'aspiration (13) en fonction de sa position de commutation (S), et une soupape d'injection (34) qui permet le dosage du carburant, **caractérisé en ce que** la position temporelle de la durée du temps d'injection du carburant est réglée en fonction d'un instant auquel a lieu une modification de la position de commutation (S) de la soupape de charge à impulsions (18).

2. Procédé selon la revendication 1, **caractérisé en ce que** la position temporelle de la durée du temps d'injection du carburant est choisie telle que la vitesse d'écoulement de l'air atteigne son maximum pendant la durée du temps de l'injection.

3. Procédé selon l'une des revendications précédentes, **caractérisé en ce que** l'instant auquel la soupape de charge à impulsions (18) est amenée dans sa position ouverte (OP) est choisi de manière telle, pendant la course d'admission, que la vitesse d'écoulement de l'air atteigne une valeur prédéterminée.

4. Procédé selon l'une des revendications précédentes, **caractérisé en ce que** l'instant auquel la soupape de charge à impulsions (18) est pilotée pour passer de sa position ouverte (OP) à sa position fermée (CL) est choisi de manière telle, pendant la course d'admission, que la vitesse d'écoulement de l'air atteigne une valeur prédéterminée à la course d'admission suivante.

5. Procédé selon l'une des revendications précédentes, **caractérisé en ce que** la position temporelle de la durée du temps d'injection du carburant est réglée, uniquement dans un état de fonctionnement (BZ) de réchauffage du moteur à combustion interne, en fonction d'un instant auquel a lieu une modification de la position de commutation (S) de la soupape de charge à impulsions (18).

6. Procédé selon la revendication 5, **caractérisé en ce qu'**il y a passage à l'état de fonctionnement (BZ) de réchauffage (WL) lorsqu'une température d'un agent réfrigérant (TCO) et/ou une température d'huile (TOIL) sont inférieures à des valeurs seuils prédéterminées et/ou le temps qui s'est écoulé depuis le démarrage du moteur à combustion interne est inférieur à une autre valeur seuil prédéterminée.

7. Dispositif pour commander un moteur à combustion interne comprenant un collecteur (12) dont part un tube d'aspiration (13) qui va vers une entrée d'un cylindre (Z1 à Z4) du moteur à combustion interne, une soupape d'admission de gaz (30) qui est située à l'entrée du cylindre (Z1 à Z4), une soupape de charge à impulsions (18) qui est située dans le tube d'aspiration (13) en amont de la soupape d'admission de gaz (30) et libère ou obture le tube d'aspiration (13) en fonction de sa position de commutation (S), et une soupape d'injection (34) qui permet le dosage du carburant, **caractérisé en ce que** sont prévus des moyens qui règlent la position temporelle de la durée du temps d'injection du carburant en fonction d'un instant auquel a lieu une modification de la position de commutation (S) de la soupape de charge à impulsions (18).
